# EUROPEAN PATENT APPLICATION

(11) **EP 4 618 379 A1**
(43) Date of publication of application: **17.09.2025**
(21) Application number: 25160228.0
(22) Date of filing: 26.02.2025
(51) Int. Cl.: H02K 5/20, H02K 9/19

(54) **COOLING STRUCTURE**

(30) Priority: 12.03.2024 JP 2024037880
(71) Applicant: TOYOTA JIDOSHA KABUSHIKI KAISHA, Toyota-shi, Aichi-ken, 471-8571 (JP)
(72) Inventor: TANAKA, Keita, Aichi-ken, 471-8571 (JP); ITO, Masahiro, Aichi-ken, 448-8650 (JP)
(74) Representative: D Young & Co LLP

(57) **Abstract**

A cooling structure for a motor extending in an axial direction may include a coolant flow path configured to allow coolant to flow in a circumferential direction of the motor and a supply port (21S) through which the coolant is supplied to the coolant flow path. The coolant flow path may include an expansion portion (31S) extending from the supply port in the circumferential direction, wherein a width of the expansion portion in the axial direction increases along the circumferential direction; and a branch portion (33S) extending from the expansion portion in the circumferential direction and branching into a plurality of branch flow paths. The expansion portion may include a first projection (35aS) extending in the axial direction and narrowing a width of the coolant flow path in a radial direction of the motor.

## Description

### REFERENCE TO RELATED APPLICATION

This application claims priority to Japanese Patent Application No. 2024-037880 filed on March 12, 2024. The entire content of the priority application is incorporated herein by reference.

### BACKGROUND ART

The disclosure herein relates to a cooling structure for a motor.

International Publication No. 2021/020468 describes a cylindrical support member that supports an outer circumferential surface of a stator core of a motor and defines a flow path through which a cooling fluid flows. According to this publication, the support member includes a cylindrical inner wall, a cylindrical outer wall that is located radially outward of the inner wall and surrounds the inner wall, and one or more partition walls that radially extend between the inner wall and the outer wall and partition the flow path between the inner wall and the outer wall.

### SUMMARY

The inventors of the invention disclosed herein are considering a cooling structure that comprises a coolant flow path configured to allow coolant to flow in a circumferential direction of a motor and a supply port through which the coolant is supplied to the coolant flow path, in which the coolant flow path comprises: an expansion portion extending from the supply port in the circumferential direction, wherein a width of the expansion portion in an axial direction increases along the circumferential direction; and a branch portion extending from the expansion portion in the circumferential direction and branching into a plurality of branch flow paths. In such cooling structures, it is effective if a flow rate and/or a flow velocity of the coolant are equalized in the axial direction of the motor before the coolant flows into the branch portion. In view of this, the disclosure herein provides a technology that contributes to equalization of a flow rate and/or a flow velocity of coolant.

The disclosure herein provides a cooling structure for a motor extending in an axial direction. The cooling structure may comprise a coolant flow path configured to allow coolant to flow in a circumferential direction of the motor and a supply port through which the coolant is supplied to the coolant flow path. The coolant flow path may comprise an expansion portion extending from the supply port in the circumferential direction, wherein a width of the expansion portion in the axial direction increases along the circumferential direction; and a branch portion extending from the expansion portion in the circumferential direction and branching into a plurality of branch flow paths. The expansion portion may comprise a first projection extending in the axial direction and narrowing a width of the coolant flow path in a radial direction of the motor.

In the configuration above, a part of the coolant supplied from the supply port into the expansion portion is blocked by the first projection and thus temporarily stays within the expansion portion. This temporal stay of the coolant within the expansion portion equalizes flow resistance of the coolant in the axial direction, thereby equalizing the flow rate and/or flow velocity of the coolant in the axial direction which is going to flow downstream beyond the first projection, i.e., into the branch portion.

### BRIEF DESCRIPTION OF DRAWINGS

FIG. 1 schematically shows a configuration including a motor according to an embodiment, viewed in an axial direction.
FIG. 2 shows a cross-sectional view taken along a line II-II in FIG. 1.
FIG. 3 shows a perspective view of a coolant flow path profile.
FIG. 4 shows a perspective view of a radially inward side of an expansion portion profile.
FIG. 5 shows a cross-sectional view of an expansion portion perpendicular to an axial direction.
FIG. 6 shows another cross-sectional view of the expansion portion perpendicular to the axial direction that is different from the cross-sectional view of FIG. 5.
FIG. 7 shows a perspective view of a radially inward side of an expansion portion profile different from that shown in FIG. 4.
FIG. 8 shows a perspective view of a part of a branch portion.
FIG. 9 shows a branch portion profile according to a variant, viewed in a radial direction.
FIG. 10 schematically shows a configuration of a motor casing according to a variant.

### DESCRIPTION

Representative, non-limiting examples of the present disclosure will now be described in further detail with reference to the attached drawings. This detailed description is merely intended to teach a person of skill in the art further details for practicing preferred aspects of the present teachings and is not intended to limit the scope of the present disclosure. Furthermore, each of the additional features and teachings disclosed below may be utilized separately or in conjunction with other features and teachings to provide improved cooling structures, as well as methods for using and manufacturing the same.

Moreover, combinations of features and steps disclosed in the following detailed description may not be necessary to practice the present disclosure in the broadest sense, and are instead taught merely to particularly describe representative examples of the present disclosure. Furthermore, various features of the above-described and below-described representative examples, as well as the various independent and dependent claims, may be combined in ways that are not specifically and explicitly enumerated in order to provide additional useful embodiments of the present teachings.

All features disclosed in the description and/or the claims are intended to be disclosed separately and independently from each other for the purpose of original written disclosure, as well as for the purpose of restricting the claimed subject matter, independent of the compositions of the features in the embodiments and/or the claims. In addition, all value ranges or indications of groups of entities are intended to disclose every possible intermediate value or intermediate entity for the purpose of original written disclosure, as well as for the purpose of restricting the claimed subject matter.

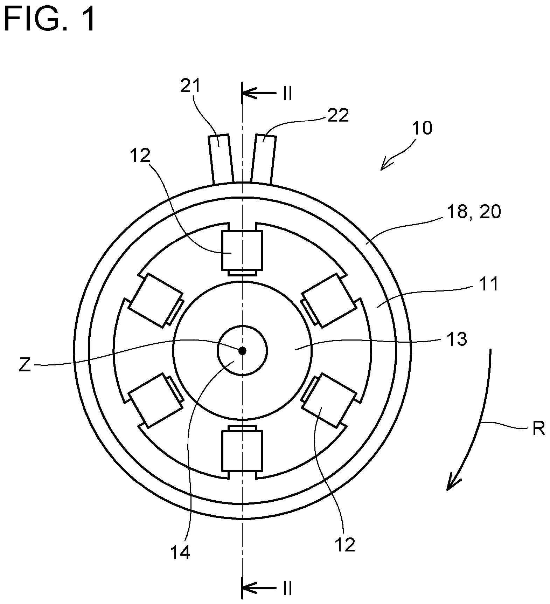

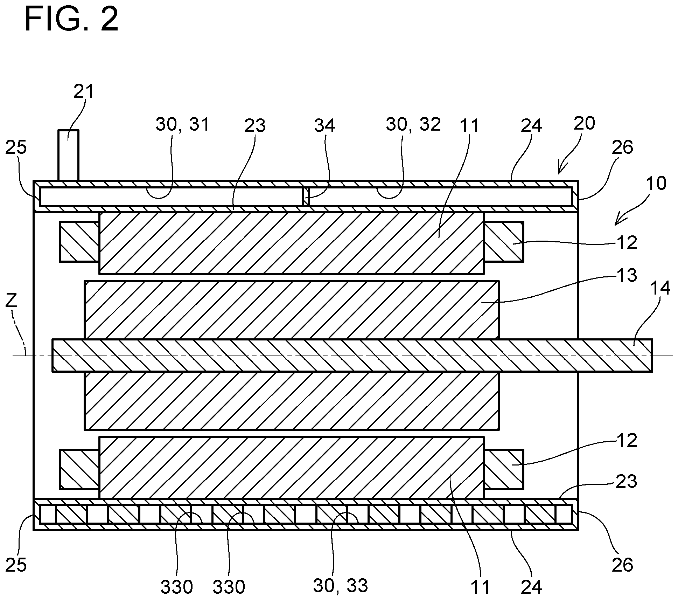

FIG. 1 schematically shows a configuration including a motor 10 viewed in an axial direction of the motor 10. FIG. 2 shows a cross-sectional view of the configuration of FIG. 1 taken along a line II-II. As shown in FIG. 1, the motor 10 comprises a stator core 11, a coil 12, a rotor 13, and a shaft 14. The stator core 11 is substantially cylindrical, and the coil 12 is wound on the stator core 11. The shape of the stator core 11 is not particularly limited. The rotor 13 is disposed in a space surrounded by the stator core 11. The rotor 13 is mounted on the shaft 14 located at the center of the motor 10, i.e., at a motor axis Z. The shaft 14 transmits the rotation of the rotor 13 to other component(s).

A motor casing 20 has a cylindrical shape extending along the axial direction. The outer circumferential surface of the stator core 11 is in contact with the inner circumferential surface of the motor casing 20, and the stator core 11 is fixed to the inner circumferential surface of the motor casing 20. That is, the motor casing 20 supports the stator core 11 from the outside in a radial direction of the motor 10 (referred to as "the radial direction" hereinafter). The motor casing 20 may be construed as a component of the motor 10. In this case, the motor casing 20 is an example of a cylindrical member 18 according to the disclosure herein.

As shown in FIG. 2, the motor casing 20 comprises an inner wall 23 located radially inward and an outer wall 24 that is opposite to the inner wall 23 and located radially outward of the inner wall 23. The stator core 11 is fixed to the inner wall 23 of the motor casing 20. A coolant flow path 30 is formed inside the motor casing 20, i.e., between the inner wall 23 and the outer wall 24. The coolant flow path 30 is configured to allow coolant to flow therein in the circumferential direction of the motor 10 (referred to as "the circumferential direction R" hereinafter) extending in the direction of the motor axis Z (referred to as "the axial direction" hereinafter). The inner circumferential surface of the coolant flow path 30 is defined by the inner wall 23, and the outer circumferential surface of the coolant flow path 30 is defined by the outer wall 24.

The inner wall 23 and the outer wall 24 are connected to each other, at their one axial end and opposing axial end, by end walls 25, 26 extending in the radial direction. Thus, the coolant flow path 30 is defined by the inner wall 23, the outer wall 24, and the end walls 25, 26. In the present embodiment, these elements of the motor casing 20 which define the coolant flow path 30 correspond to a cooling structure of the motor 10. Simply, the motor casing 20 itself can be construed as the cooling structure. The coolant is a fluid with cooling effect. In the disclosure herein, the coolant is cooling water. In an example, the coolant may be cooling oil.

The motor casing 20 comprises a supply port 21 through which the coolant is supplied and an outlet port 22 through which the coolant flows out. The supply port 21 and the outlet port 22 both communicate with the coolant flow path 30. The supply port 21 is configured to allow the coolant to be supplied into the coolant flow path 30 from the outside. The outlet port 22 is configured to allow the coolant, which has been supplied from the supply port 21 and flowed through the coolant flow path 30, to flow to the outside. The coolant is pressured by a pump (not shown) to circulate through the coolant flow path 30 and flow path(s) outside the motor casing 20 (not shown).

The coolant flow path 30 comprises an expansion portion 31 communicating with the supply port 21, a decrease portion 32 communicating with the outlet port 22, and a branch portion 33 that extends in the circumferential direction R and connects the expansion portion 31 to the decrease portion 32. The branch portion 33 extends from the expansion portion 31 in the circumferential direction R and branches into a plurality of branch flow paths 330. The branch portion 33 can be construed as a collectivity of the branch flow paths 330. Since a separation wall 34 separates the expansion portion 31 from the decrease portion 32, the expansion portion 31 is not directly connected to the decrease portion 32. Once having flowed into the expansion portion 31 through the supply port 21, all the coolant flows through the branch portion 33 and then flows through the decrease portion 32 before flowing out from the outlet port 22.

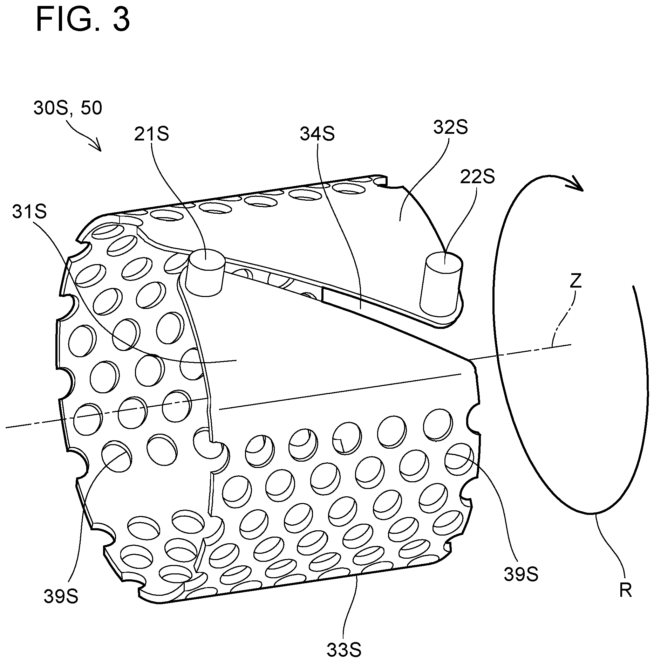

FIG. 3 shows a perspective view of a profile 30S of the coolant flow path 30 (coolant flow path profile 30S). The coolant flow path profile 30S is a spatial profile, and this coolant flow path profile 30S is formed inside the motor casing 20. That is, the coolant flow path 30 is configured by the respective walls of the motor casing 20 including the supply port 21 and the outlet port 22, and the coolant flow path profile 30S is a space defined by these respective walls. Thus, the coolant flow path profile 30S comprises a supply port profile 21S, an outlet port profile 22S, an expansion portion profile 31S, a branch portion profile 33S, and a decrease portion profile 32S corresponding to the supply port 21, the outlet port 22, the expansion portion 31, the branch portion 33, and the decrease portion 32, respectively. In the motor casing 20, the separation wall 34 is located in a space 34S between the expansion portion profile 31S and the decrease portion profile 32S.

The coolant flow path profile 30S can be construed as a core 50 used to manufacture the motor casing 20. Although details are omitted herein, the core 50 is placed in a mold for manufacturing the cylindrical member and a molten metal material is then poured into the mold, thereby casting the motor casing 20. For example, the core 50 is formed of salt and/or sand. After the metal material has been solidified, the motor casing 20 is removed from the mold, and the core 50 is broken to be removed from the motor casing 20. As a result, a space having the same shape as that of the core 50, i.e., a space having the coolant flow path profile 30S is formed in the motor casing 20.

Hereinafter, the elements forming the coolant flow path 30 are not clearly distinguished from the space defined by these elements. That is, descriptions on the coolant flow path profile 30S are applied to the coolant flow path 30. Similarly, descriptions on the supply port profile 21S, the outlet port profile 22S, the expansion portion profile 31S, the branch portion profile 33S, and the decrease portion profile 32S are applied to the supply port 21, the outlet port 22, the expansion portion 31, the branch potion 33, and the decrease portion 32, respectively.

As shown in FIG. 3, the expansion portion profile 31S extends from the supply port profile 21S in the circumferential direction R while increasing its width along the axial direction (axial width). That is, the expansion portion 31 extends from the supply port 21 in the circumferential direction R while gradually increasing its axial width, and connects with the branch portion 33. The branch portion profile 33S extends from the expansion portion profile 31S in the circumferential direction R and branches into a plurality of branch flow paths. The decrease portion profile 32S extends in the circumferential direction R from a position where the branch portion profile 33S connects with the decrease portion profile 32S while decreasing its axial width, and connects with the outlet port profile 22S. The width of the expansion portion 31 at the position where the expansion portion 31 connects with the branch portion 33 and the width of the decrease portion 32 at the position where the decrease portion 32 connects with the branch portion 33 both can be construed as being substantially the same as the axial width of the branch portion 33. Further, the axial width of the branch portion 33 can be construed as being substantially constant.

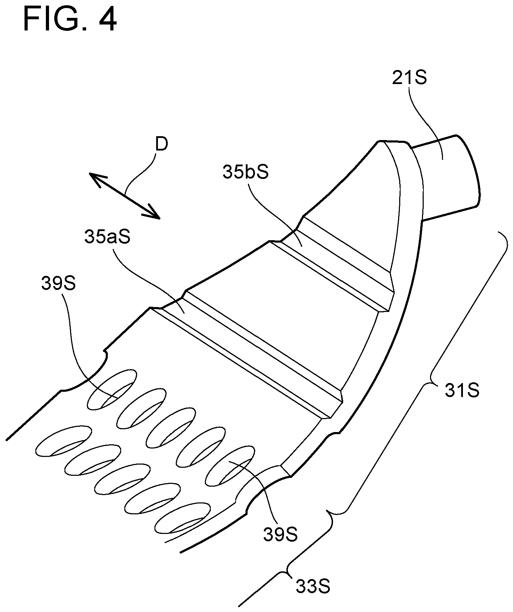

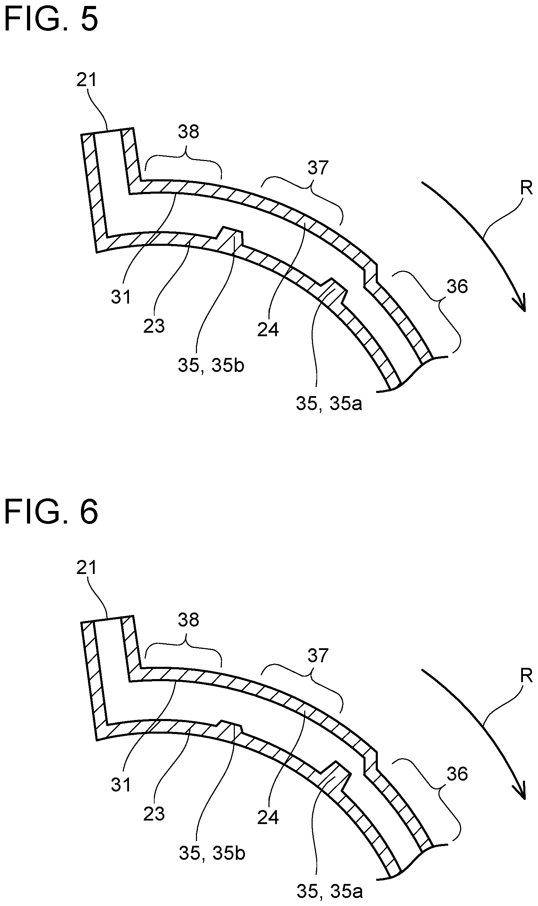

FIG. 4 shows a perspective view of the radially inward side of the expansion portion profile 31S. An arrow D indicates a direction D parallel to the motor axis Z. Thus, the direction D can be regarded as the axial direction. FIG. 5 shows a cross-sectional view of the expansion portion 31 perpendicular to the axial direction.

In this embodiment, the expansion portion 31 comprises at least one projection 35 that extends in the axial direction and narrows the width of the coolant flow path 30 in the radial direction. FIGS. 4 and 5 show an example in which the expansion portion 31 comprises two projections 35, however, the expansion portion 31 may comprise one projection 35, or three or more projections 35. To distinguish the projections 35 from each other, one projection 35 may be referred to as a first projection 35a, and the other projection 35 may be referred to as a second projection 35b. As an example, among the projections 35, the projection 35 that is closer to the supply port 21 is referred to as a second projection 35b, and the other projection 35 that is farther from the supply port 21 is referred to as the first projection 35a. The first projection 35a and the second projection 35b may be counterchanged in their positions.

A projection 35 extending in the axial direction means not only that the longitudinal direction of the projection 35 is parallel to the axial direction but also that the longitudinal direction of the projection 35 is substantially parallel to the axial direction. For example, the longitudinal direction of the projection 35 may be at an angle to the axial direction within a predetermined angle range.

As shown in FIG. 5, in the expansion portion 31, the first projection 35a and the second projection 35b are formed by parts of the inner wall 23 projecting radially outward. Further, as shown in FIG. 4, the expansion portion profile 31S comprises a first projection profile 35aS corresponding to the first projection 35a and a second projection profile 35bS corresponding to the second projection 35b. In terms of space profile, the first projection profile 35aS and the second projection profile 35bS are recesses as shown in FIG. 4, while in terms of object profile, i.e., profiles of the first and second projections 35a and 35b of the inner wall 23, these projections are convex portions as shown in FIG. 5. The at least one projection 35 may be formed by part(s) of the outer wall 24 projecting radially inward.

From the first projection profile 35aS and the second projection profile 35bS shown in FIG. 4, it is understood that the first projection 35a and the second projection 35b continuously extend from one axial end of the expansion portion 31 to the other axial end thereof. However, the continuous extension of at least one of the projections 35 from one axial end to the other axial end of the expansion portion 31 may be interrupted at one or more positions. Further, in an example where the expansion portion 31 comprises multiple projections 35, the individual projections 35 may have the same projection height or may have different projection heights. In the example shown in FIG. 5, the first projection 35a and the second projection 35b have the same radial projection height.

FIG. 6 shows a cross-sectional view of the expansion portion 31 perpendicular to the axial direction, similar to FIG. 5. For FIG. 6, only differences from FIG. 5 are described. In the example shown in FIG. 6, the first projection 35a and the second projection 35b have different radial projection heights. Specifically, the projection height of the first projection 35a is greater than the projection height of the second projection 35b. The projection height of the second projection 35b may be greater than the projection height of the first projection 35a.

In the examples shown in FIGS. 5 and 6, the first projection 35a and the second projection 35b delimit approximately three ranges within the expansion portion 31 along the circumferential direction R. Here, the range of the expansion portion 31 that is located downstream of the first projection 35a is referred to as a first range 36, the range of the expansion portion 31 that is located upstream of the first projection 35a and downstream of the second projection 35b is referred to as a second range 37, and the range of the expansion portion 31 that is located upstream of the second projection 35b is referred to as a third range 38. If the second projection 35b does not exist, the range of the expansion portion 31 that is located upstream of the first projection 35a is the second range 37.

As understood from FIGS. 5 and 6, the expansion portion 31 has a greater radial width in the second range 37 and the third range 38 than in the first range 36. Radial widths of the expansion portion 31 in the first range 36, the second range 37, and the third range 38 can be construed as radial distances between the inner wall 23 and the outer wall 24 in these ranges. These different radial widths of the expansion portion 31 are a result of ensuring the strength of the core 50 described above. The radial width of the expansion portion profile 31S is decreased at the positions of the first projection profile 35aS and the second projection profile 35bS. The thickness of the core 50 is determined appropriately to compensate decreased strength of the core 50 at these width-decreased portions, which results in the greater radial width in the second range 37 and the third range 38 than in the first range 36. Regarding the branch portion 33 and the decrease portion 32 of the coolant flow path 30, their radial widths can be construed as being the same as the radial width in the first range 36. Alternatively, the radial width required in the second range 37 and the third range 38 may be applied to the entire coolant flow path 30, so that the radial width may be constant over the entire coolant flow path 30.

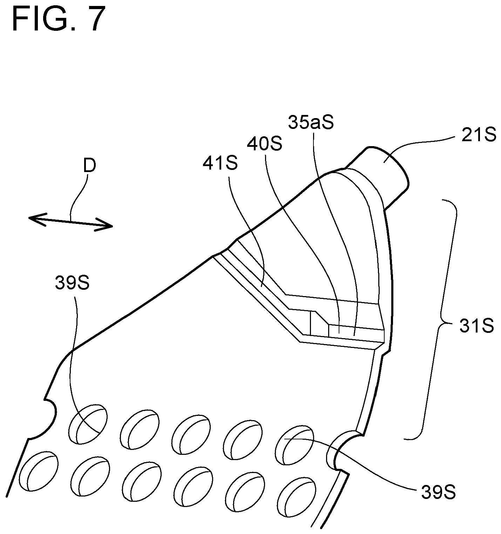

FIG. 7 shows a perspective view of the radially inward side of an expansion portion profile 31S according to an example different from that shown in FIG. 4. The point of view for FIG. 7 is the same as that for FIG. 4. For FIG. 7, descriptions that were made in connection with FIG. 4 are omitted. As shown in FIG. 7, the expansion portion profile 31S comprises a first projection profile 35aS. That is, an expansion portion 31 comprising at least a first projection 35a can be understood from FIG. 7. As shown in FIG. 7, the first projection profile 35aS is partially inclined to the axial direction. That is, the first projection 35a is bent at one or more positions along its axial extension. The first projection 35a may be bent at multiple positions. Of course, other projection(s) 35 such as a second projection 35b may also be bent.

As shown in FIG. 7, the first projection profile 35aS comprises a first section profile 40S and a second section profile 41S along the axial direction. The depth of the first section profile 40S is different from the depth of the second section profile 41S. That is, it is understood from FIG. 7 that the first projection 35a comprises a first section corresponding to the first section profile 40S and a second section corresponding to the second section profile 41S along the axial direction and that the radial projection height of the first section is different from the radial projection height of the second section. Of course, other projection(s) 35 such as a second projection 35b may also comprise a plurality of sections, and the projection height of the projection 35 may be different from section to section.

The feature that one projection 35 is bent and the feature that one projection 35 has different projection heights in multiple sections may be independent from each other. For example, the first projection 35a may not be bent and may have different projection heights in multiple sections. Alternatively, for example, the first projection 35a may be bent and may have a constant projection height.

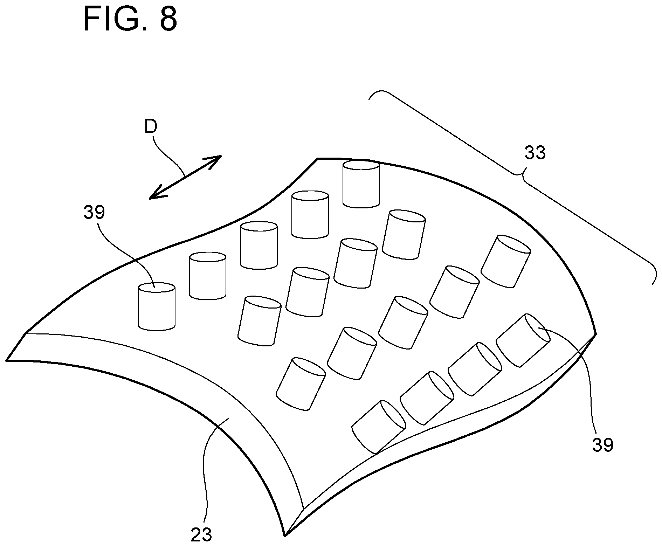

FIG. 8 shows a perspective view of a part of the branch portion 33. The branch portion 33 comprises a plurality of columns 39 that are spaced apart from each other in the axial direction and in the circumferential direction R. Each column 39 extends in the radial direction and connects the inner wall 23 to the outer wall 24 of the motor casing 20. In order to facilitate understanding, the outer wall 24 and the end walls 25, 26 of the motor casing 20 are not shown in FIG. 8. As shown in FIG. 8, each column 39 has a circular cross section perpendicular to the radial direction. Thus, the columns 39 can be construed as circular columns. However, the cross section of the columns 39 may be polygonal, such as hexagonal or octagonal.

The plurality of columns 39 branches the branch portion 33 into a plurality of branch flow paths 330. That is, the branch flow paths 330 connect the expansion portion 31 to the decrease portion 32 while repeatedly separating from one another and joining together. As understood from FIG. 8, within the motor casing 20, each of the columns 39 is in corresponding one of a plurality of hole profiles 39S of the branch portion profile 33S shown in FIGS. 3, 4, and 7. Further, the cross sections spaced at regular intervals along the axial direction in the branch portion 33 shown in FIG. 2 can be construed as cross sections of the columns 39.

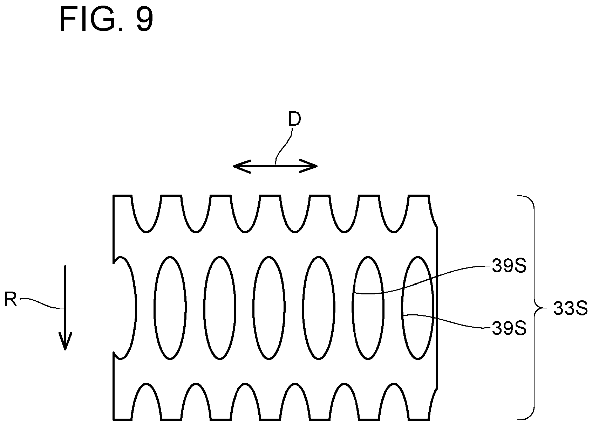

FIG. 9 shows a part of the branch portion profile 33S viewed in the radial direction. In the example shown in FIG. 9, the hole profiles 39S of the branch portion profile 33S have an elliptical shape elongated in the circumferential direction R. That is, as understood from FIG. 9, at least one of the plurality of columns 39 of the branch portion 33 may have an elliptical cross section perpendicular to the radial direction.

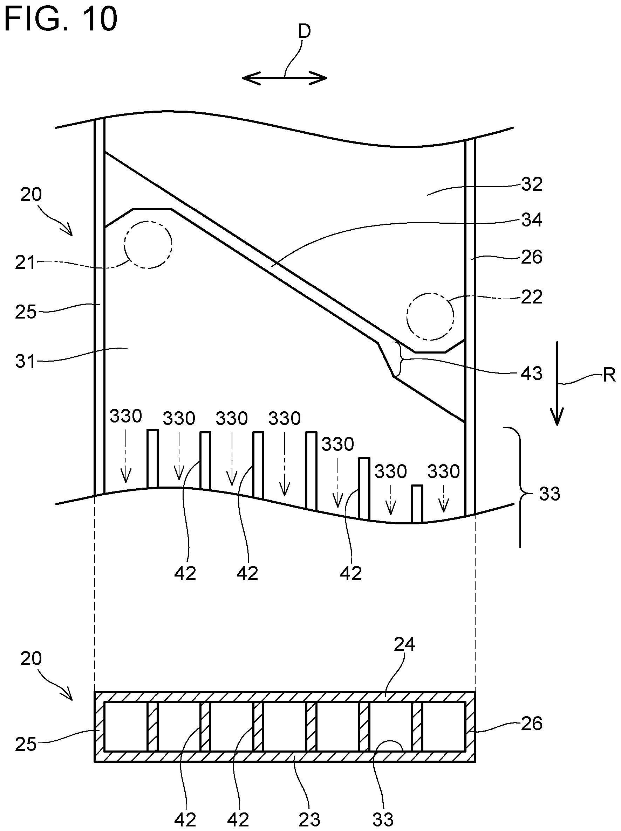

The upper portion of FIG. 10 schematically shows the structure of the motor casing 20 as viewed from radially outside. In order to facilitate understanding, the outer wall 24 is not shown in the upper portion of FIG. 10. In FIG. 10, the two-dot-dash line circles indicate the positions of the supply port 21 and the outlet port 22, respectively. Further, the lower portion of FIG. 10 shows a cross-sectional view of the branch portion 33 perpendicular to the circumferential direction R.

As shown in the example of FIG. 10, the branch portion 33 may comprise a plurality of intermediate walls 42 instead of the plurality of columns 39 described above. Each intermediate wall 42 connects the inner wall 23 to the outer wall 24 and extends in the circumferential direction R. Further, the intermediate walls 42 are spaced apart from each other in the axial direction. The plurality of intermediate walls 42 branches the branch portion 33 into the plurality of branch flow paths 330. The branch flow paths 330, which are separated from each other by the intermediate walls 42, each connect the expansion portion 31 to the decrease portion 32. Each intermediate wall 42 basically extends over the entire range of the branch portion 33 in the circumferential direction R. However, as exemplified in FIG. 10, starting positions of one or more intermediate walls 42 of the plurality of intermediate walls 42, from which the intermediate walls 42 extend from the expansion portion 31, may not be aligned in the circumferential direction R. Further, the intermediate walls 42 may not be parallel to the circumferential direction R and may extend at an angle to the circumferential direction R.

Further, in the example shown in FIG. 10, the expansion portion 31 comprises a gradual portion 43 in a portion of the expansion portion 31 in the circumferential direction R. An increase rate of the axial width of the expansion portion 31 is smaller in the gradual portion 43 than in other portions of the expansion portion 31 at different positions along the circumferential direction R. The increase rate of the axial width of the expansion portion 31 along the circumferential direction R can be termed an expansion rate of the expansion portion 31. Of course, the expansion portion 31 comprising the gradual portion 43 may be used with the branch portion 33 comprising the columns 39.

In the present embodiment, the expansion portion 31 comprises one or more projections 35 as described above, although this is not shown in FIG. 10. The positional relationship between the one or more projections 35 and the gradual portion 43 may vary. Within the expansion portion 31, the gradual portion 43 may be located upstream of or downstream of one projection 35. Alternatively, the one or more projections 35 may be located in the gradual portion 43. For example, the gradual portion 43 may be formed within the second range 37 shown in FIGS. 5 and 6. Further, the expansion portion 31 may comprise a plurality of gradual portions 43 at a plurality of positions along the circumferential direction R.

According to the present embodiment, the cooling structure for the motor 10 extending in the axial direction comprises the coolant flow path 30 configured to allow the coolant to flow therein in the circumferential direction R of the motor 10; and the supply port 21 through which the coolant is supplied to the coolant flow path 30. The coolant flow path 30 comprises the expansion portion 31 extending from the supply port 21 in the circumferential direction R, wherein the axial width of the expansion portion 31 increases along the circumferential direction R; and the branch portion 33 extending from the expansion portion 31 in the circumferential direction R and branching into the plurality of branch flow paths 330. The expansion portion 31 comprises the first projection 35a extending in the axial direction and narrowing the width of the coolant flow path 30 in the radial direction of the motor 10.

In the configuration above, a part of the coolant supplied through the supply port 21 into the expansion portion 31 is blocked by the first projection 35a and thus likely to temporarily stay within the expansion portion 31. After that, the coolant flows downstream beyond the first projection 35a to the branch portion 33. The temporal stay of the coolant within the expansion portion 31 equalizes flow resistance of the coolant in the axial direction. This equalizes the flow rate and/or flow velocity of the coolant, which is going to flow downstream beyond the first projection 35a, at any positions along the axial direction within the coolant flow path 30 and thus suppresses local cooling of the motor 10.

According to an embodiment, the expansion portion 31 further comprises the second projection 35b extending in the axial direction and narrowing the width of the coolant flow path 30 in the radial direction of the motor 10. The second projection 35b may be located between the supply port 21 and the first projection 35a in the circumferential direction R. Since the expansion portion 31 comprises the second projection 35b in addition to the first projection 35a, the configuration above has an enhanced effect of equalizing the flow rate and/or flow velocity of the coolant in the axial direction by blocking the coolant to temporarily stay within the expansion portion 31 before it flows into the branch portion 33.

According to an embodiment, the radial projection height of the first projection 35a is different from the radial projection height of the second projection 35b. That is, the projections 35 may be different from each other in projection height. The different projection heights of the first projection 35a and the second projection 35b facilitate controlling the flow rate and/or flow velocity of the coolant to be flow into the branch portion 33.

According to an embodiment, the first projection 35a is bent at one or more positions along the axial direction. The bend(s) of the first projection 35a facilitates controlling the flow rate and/or flow velocity of the coolant to be flow downstream beyond the first projection 35a.

According to an embodiment, the first projection 35a comprises the first section and the second section along the axial direction, and the radial projection height of the first projection 35a in the first section is different from the radial projection height of the first projection 35a in the second section. The different projection heights of the first projection 35a in the respective sections facilitates controlling the flow rate and/or flow velocity of the coolant to flow downstream beyond the first projection 35a.

According to an embodiment, the first projection 35a is formed continuously from one axial end of the expansion portion 31 to the other axial end thereof. This configuration allows for more appropriate equalization of the flow rate and/or flow velocity of the coolant to flow downstream beyond the first projection 35a.

According to an embodiment, the radial width of a part of the expansion portion 31 that is located upstream of the first projection 35a is greater than the radial width of a part of the expansion portion 31 that is located downstream of the first projection 35a. This ensures that the coolant flow path 30 was formed using the core 50 having appropriate strength, as described above.

According to an embodiment, the motor 10 comprises the cylindrical member 18 within which the coolant flow path 30 is defined. The cylindrical member 18 comprises the inner wall 23 defining the inner circumferential surface of the coolant flow path 30 and the outer wall 24 defining the outer circumferential surface of the coolant flow path 30. The cylindrical member 18 further comprises the plurality of columns 39 located in the branch portion 33 and each extending between the inner wall 23 and the outer wall 24. The plurality of columns 39 branches the branch portion 33 into the plurality of branch flow paths 330. The cross sections of the columns 39 perpendicular to the radial direction of the motor 10 may have any shapes such as circle, polygons, etc. At least one of the plurality of columns 39 has an elliptical cross section perpendicular to the radial direction.

According to an embodiment, the motor 10 comprises the cylindrical member 18 within which the coolant flow path 30 is defined. The cylindrical member 18 comprises the inner wall 23 defining the inner circumferential surface of the coolant flow path 30 and the outer wall 24 defining the outer circumferential surface of the coolant flow path 30. The cylindrical member 18 further comprises the plurality of intermediate walls 42 located in the branch portion 33 and each connecting the inner wall 23 to the outer wall 24 and extending in the circumferential direction R. The intermediate walls 42 are spaced apart from each other in the axial direction. The plurality of intermediate walls 42 branches the branch portion 33 into the plurality of branch flow paths 330.

According to an embodiment, the cylindrical member 18 is the motor casing 20 that supports the stator core 11 of the motor 10 from radially outside. This facilitates the formation of the cooling structure for the motor 10 by forming the coolant flow path 30 within the motor casing 20 during the manufacture of the motor casing 20.

It should be noted that forming the coolant flow path 30 between the inner wall 23 and the outer wall 24 of the motor casing 20 is merely an example. For example, the motor casing 20 as the cylindrical member 18 may not comprise the inner wall 23. In this case, one or both of the outer circumferential surface of the stator core 11 and the outer wall 24 of the motor casing 20 which faces the outer circumferential surface may be processed to form the coolant flow path 30 between the outer circumferential surface of the stator core 11 and the outer wall 24 of the motor casing 20.

According to an embodiment, the expansion portion 31 comprises the gradual portion 43 in a portion of the expansion portion 31 in the circumferential direction R. The increase rate of the axial width of the expansion portion 31 is smaller in the gradual portion 43 than in other portions of the expansion portion 31 at different positions along the circumferential direction R. The gradual portion 43 in a portion of the expansion portion 31 suppresses a large amount of the coolant from flowing to the axial ends of the expansion portion 31 when the coolant is flowing toward the branch portion 33, which ensures that an appropriate amount of the coolant flows through an axial center portion of the expansion potion 31.

Specific examples of the disclosure herein have been described in detail, however, these are mere exemplary indications and thus do not limit the scope of the claims. The art described in the claims includes modifications and variations of the specific examples presented above. Technical features described in the description and the drawings may technically be useful alone or in various combinations, and are not limited to the combinations as originally claimed. Further, the purpose of the examples illustrated by the present description or drawings is to satisfy multiple objectives simultaneously, and satisfying any one of those objectives gives technical utility to the present disclosure.

## Claims

1. A cooling structure for a motor (10) extending in an axial direction, the cooling structure comprising:
a coolant flow path (30) configured to allow coolant to flow in a circumferential direction of the motor (10); and
a supply port (21) through which the coolant is supplied to the coolant flow path (30),
wherein the coolant flow path (30) comprises:
an expansion portion (31) extending from the supply port (21) in the circumferential direction, wherein a width of the expansion portion (31) in the axial direction increases along the circumferential direction; and
a branch portion (33) extending from the expansion portion (31) in the circumferential direction and branching into a plurality of branch flow paths (330),
wherein the expansion portion (31) comprises a first projection (35a) extending in the axial direction and narrowing a width of the coolant flow path (30) in a radial direction of the motor (10).

2. The cooling structure according to claim 1, wherein
the expansion portion (31) further comprises a second projection (35b) extending in the axial direction and narrowing the width of the coolant flow path (30) in the radial direction of the motor (10), and
the second projection (35b) is located between the supply port (21) and the first projection (35a) in the circumferential direction.

3. The cooling structure according to claim 2, wherein a projection height of the first projection (35a) in the radial direction is different from a projection height of the second projection (35b) in the radial direction.

4. The cooling structure according to one of claims 1 to 3, wherein the first projection (35a) is bent at one or more positions along the axial direction.

5. The cooling structure according to one of claims 1 to 4, wherein
the first projection (35a) comprises a first section and a second section along the axial direction, and
a projection height of the first section of the first projection (35a) in the radial direction is different from a projection height of the second section of the first projection (35a) in the radial direction.

6. The cooling structure according to one of claims 1 to 5, wherein the first projection (35a) is formed continuously from one axial end of the expansion portion (31) to other axial end thereof.

7. The cooling structure according to one of claims 1 to 6, wherein a radial width of a part of the expansion portion (31) that is located upstream of the first projection (35a) is greater than a radial width of a part of the expansion portion (31) that is located downstream of the first projection (35a).

8. The cooling structure according to one of claims 1 to 7, wherein
the motor (10) comprises a cylindrical member (18) within which the coolant flow path (30) is defined, and
the cylindrical member (18) comprises:
an inner wall (23) defining an inner circumferential surface of the coolant flow path (30);
an outer wall (24) defining an outer circumferential surface of the coolant flow path (30); and
a plurality of columns (39) located in the branch portion (33) and each extending between the inner wall (23) and the outer wall (24).

9. The cooling structure according to claim 8, wherein at least one of the plurality of columns (39) has an elliptical cross section perpendicular to the radial direction.

10. The cooling structure according to one of claims 1 to 7, wherein
the motor (10) comprises a cylindrical member (18) within which the coolant flow path (30) is defined, and
the cylindrical member (18) comprises:
an inner wall (23) defining an inner circumferential surface of the coolant flow path (30);
an outer wall (24) defining an outer circumferential surface of the coolant flow path (30); and
a plurality of intermediate walls (42) located in the branch portion (33) and each connecting the inner wall (23) to the outer wall (24) and extending in the circumferential direction, wherein the intermediate walls (42) are spaced apart from each other in the axial direction.

11. The cooling structure according to one of claims 8 to 10, wherein the cylindrical member (18) is a motor casing (20) that supports a stator core (11) of the motor (10) from radially outside.

12. The cooling structure according to one of claims 1 to 11, wherein
the expansion portion (31) comprises a gradual portion (43) in a portion thereof in the circumferential direction, and
an increase rate of the width of the expansion portion (31) in the axial direction is smaller in the gradual portion (43) than in other portions of the expansion portion (31) at different positions along the circumferential direction.
